# EUROPÄISCHE PATENTSCHRIFT

(11) **EP 2 338 106 B1**
(45) Veröffentlichungstag und Bekanntmachung des Hinweises auf die Patenterteilung: **18.03.2020**
(21) Anmeldenummer: 09748026.3
(22) Anmeldetag: 14.10.2009
(51) Int. Cl.: B60K 37/06

(54) **MULTIFUNKTIONSANZEIGE- UND BEDIENSYSTEM SOWIE VERFAHREN ZUM STEUERN EINES SOLCHEN SYSTEMS MIT OPTIMIERTER GRAFISCHER BEDIENDARSTELLUNG**
MULTI-FUNCTION DISPLAY AND OPERATING SYSTEM AND METHOD FOR CONTROLLING SUCH A SYSTEM HAVING OPTIMIZED GRAPHICAL OPERATING DISPLAY
SYSTÈME D'AFFICHAGE ET DE COMMANDE MULTIFONCTIONNEL ET PROCÉDÉ DE RÉGLAGE D'UN TEL SYSTÈME AVEC UNE REPRÉSENTATION DE COMMANDE GRAPHIQUE OPTIMISÉE

(30) Priorität: 15.10.2008 DE 102008052797; 02.10.2009 DE 102009048043
(43) Veröffentlichungstag der Anmeldung: 29.06.2011
(73) Patentinhaber: Volkswagen Aktiengesellschaft, 38440 Wolfsburg (DE)
(72) Erfinder: WÄLLER, Christoph, 38106 Braunschweig (DE); MISCHKE, Michael, 30167 Hannover (DE)
(74) Vertreter: Obst, Bernhard
(86) Internationale Anmeldenummer: PCT/EP2009/007375
(87) Internationale Veröffentlichungsnummer: WO 2010/043388

(56) Entgegenhaltungen:
- DE-A1- 10 342 666
- US-A1- 2007 052 545

## Beschreibung

Die Erfindung betrifft ein Multifunktionsanzeige- und Bediensystem nach dem Oberbegriff des Patentanspruchs 1 sowie ein Verfahren mit den Merkmalen nach dem Oberbegriff des Patentanspruchs 8.

In modernen Kraftfahrzeugen werden vermehrt Multifunktionsanzeige- und Bediensysteme eingesetzt, die mindestens eine Anzeigevorrichtung zum Anzeigen von Informationen sowie eine Steuereinheit umfassen, die eine Informationsdarstellung auf einer Anzeigefläche der Anzeigevorrichtung steuert. Mit der Steuereinheit ist mindestens eine Bedieneinrichtung zum Erfassen von Nutzereingaben gekoppelt. Über diese Bedieneinrichtung können Betätigungshandlungen eines Nutzers erfasst werden. Mit einem solchen System ist es möglich, eine Vielzahl unterschiedlicher Fahrzeugfunktionen zu steuern und zu bedienen.

Aus der DE 103 42 666 DE ist ein Bediensystem für ein Fahrzeug bekannt, die eine optische Anzeigeeinheit zur Darstellung mindestens einer Funktion und mindestens ein Betätigungsmittel umfasst, das zur Bedienung der mindestens einen dargestellten Funktion der optischen Anzeigeeinheit zugeordnet ist. Das Bediensystem umfasst ein weiteres Betätigungsmittel und einen Sensor, der eine Annäherung an das weitere Betätigungsmittel detektiert, wobei nach der erkannten Annäherung eine dem weiteren Betätigungsmittel zugeordnete Funktion auf der optischen Anzeigeeinheit dargestellt wird.

Aus der DE 103 26 215 A1 ist eine Bedienvorrichtung für Geräte und/oder Fahrzeuge mit konkreten Bedieneinrichtungen bekannt, die einen im Sichtbereich der Bedienperson angeordneten Bildschirm mit einer Bildschirmanzeige umfassen. Den Bedieneinrichtungen ist eine Sensorik zum berührungslosen Erfassen der Präsenz und/oder Bewegung der Bedienperson im Nahbereich der jeweiligen Bedieneinrichtung zugeordnet. Die Bildschirmanzeige stellt eine Funktion über die mit der Bedieneinrichtung bedienbare Funktion dar, wenn sich die Bedienperson im Nahbereich der entsprechenden Bedieneinrichtung befindet.

Aus der US 2007/0052545 A1 ist eine Bedieneinrichtung für ein Kraftfahrzeug bekannt, die eine Steuereinrichtung, Bedientasten und einen Computer umfasst, der ausgebildet ist, auf Betätigung der Bedientasten zu reagieren, indem durch die Bedieneinrichtung ausgewählt Steuerfunktionen ausgeführt werden. Das Computersystem ist in der Lage, eine Anzeigeeinrichtung zu steuern, die eine Ansicht der Bedientasten darstellt und auf eine Betätigung einer ersten Bedientaste zweiten Bedientasten eine Funktion zuordnet und diese Funktionszuordnung anzeigt.

Aus der DE 10 2005 060 605 A1 ist eine Bedieneinrichtung für ein Fahrzeug mit berührungssensitiven Flächen bekannt, wobei die Flächen eine Vielzahl verschiedener Bedienfelder aufweist, denen jeweils zumindest eine Steuerfunktion zugeordnet ist, wobei verschiedene Bedienfelder durch ein Gitter voneinander getrennt sind, wobei die berührungssensitive Fläche als berührungssensitives Display ausgestaltet ist und wobei die auf einem Bedienfeld dargestellte Information vom Betriebszustand des Fahrzeugs abhängig ist. Eine solche Bedieneinrichtung kann in unterschiedlichen Fahrzeugen eingesetzt werden und hierbei für eine Bedienung unterschiedlicher Fahrzeugsysteme angepasst an den jeweiligen Betriebszustand, d.h. die jeweilige Ausstattung des Fahrzeugs, eingesetzt werden.

Aus der DE 10 2006 028 046 A1 ist eine kombinierte Anzeige- und Bedienvorrichtung für ein Kraftfahrzeug bekannt, die einen berührungsempfindlichen Bildschirm zur Anzeige und Auswahl von Bedienfunktionen umfasst, wobei eine Einrichtung zur Erfassung eines Betätigungselements, insbesondere einer Hand oder eines Fingers, vorgesehen ist, wobei der Bildschirm bei einem Erfassen eines Betätigungselements in einem vorbestimmten Bereich um den Bildschirm von einem Informationsmodus in einen Betriebsmodus, in dem eine Anwahl von Bedienfunktionen möglich ist, umschaltbar ist.

Aus der DE 10 2006 034 415 A1 sind ein Verfahren und eine Anordnung zum Bedienen von elektrischen Geräten bekannt. Durch mindestens eine Bedieneinrichtung kann in einer Menüebene zumindest eine weitere Menüebene ausgewählt und an einer Anzeige angezeigt werden. Bei einer Annäherung eines Objekts an die mit einem Annäherungssensor ausgestattete Bedieneinrichtung oder Berühren der mit einem Berührungssensor ausgestatteten Bedieneinrichtung durch ein Objekt wird in der Anzeige im Sinne einer Vorschau die durch die Bedieneinrichtung ausgewählte, weitere Menüebene angezeigt. Bei einem Entfernen des Objekts, beispielsweise eines Fingers einer Person, verschwindet die weitere Menüebene wieder und die ursprünglich dargestellte Menüebene wird automatisch wieder angezeigt. Hierdurch wird ein mehrfaches Betätigen der Bedieneinrichutngen vermieden, wodurch bei den elektrischen Geräten der Bedienungskomfort erhöht wird.

Aus der DE 10 2006 037 762 A1 ist eine Multifunktionsbedienvorrichtung in einem Kraftfahrzeug bekannt. Diese umfasst eine Anzeigevorrichtung mit einem Anzeigeschirm und mindestens einer berührungsempfindlichen Sensoreinheit. Auf der Anzeigevorrichtung werden Informationsdaten, insbesondere Bild- oder Videodaten, zumindest nach Aktivierung einer Funktion wiedergegeben, wobei die Informationsdaten in einem Vollbildmodus zumindest im Wesentlichen ohne eine Darstellung von Bedieneinrichtungen auf dem Anzeigeschirm wiedergegeben werden und mittels der mindestens einen positionsempfindlichen Sensoreinheit eine erste Bedienhandlung erfasst wird, die ein Annähern eines Körperteils eines Nutzers an den Anzeigeschirm und/oder ein Berühren des Anzeigeschirms mit einem Körperteil jeweils an einer Position umfasst, an der Informationsdaten wiedergegeben werden, wobei als Folge der erfassten ersten Bedienhandlung auf dem Anzeigeschirm Bedien- und/oder Informationselemente eingeblendet werden.

Aus der DE 10 2006 037 156 A1 sind eine interaktive Bedienvorrichtung mit einer Anzeigevorrichtung und ein Verfahren zum Betreiben der interaktiven Bedienvorrichtung bekannt. Das bekannte Verfahren umfasst folgende Schritte: Anzeigen von grafischen Informationen auf der Anzeigevorrichtung; Empfangen von Sensorinformationen; Aktivieren einer Bedienaktion, wenn anhand der Sensorinformationen ermittelt wird, dass ein Körperteil eines Nutzers sich innerhalb eines Aktivierungsbereichs befindet, der räumlich relativ zu einem Darstellungsgebiet einer Bedieneinrichtung auf der Anzeigevorrichtung festgelegt ist, dem die Bedienaktion zugeordnet ist; wobei die empfangenen Sensorinformationen Nutzerinformationen umfassen, die zum Ermitteln einer Bedienabsicht für die mindestens eine Bedieneinrichtung zeitlich vor einem Aktivieren der Bedienaktion ausgewertet werden; und die auf der Anzeigevorrichtung dargestellten Informationen in Abhängigkeit von der ermittelten Bedienabsicht angepasst werden, so dass die mindestens eine Bedieneinrichtung optimiert für das Aktivieren der der Bedieneinrichtung zugeordneten Bedienaktion dargestellt wird.

Aus der DE 10 2007 029 618 A1 ist eine berührungslos aktivierbare Anzeige- und Bedienvorrichtung bekannt. Die Anzeige- und Bedienvorrichtung ist in einem ersten Modus und mindestens in einem zweiten aktivierten Modus betreibbar. Eine Umschaltung von dem ersten Modus in den zweiten aktivierten Modus ist abhängig von einer Annäherung des Betätigungselements an die vorzugsweise als Touchscreen ausgebildete Anzeigevorrichtung. In dem zweiten Modus findet eine veränderte Informationswiedergabe statt, welche die Bedienung von Fahrzeugfunktionen und Systemen ermöglicht, die über die Anzeige- und Bedienvorrichtung bedienbar sind. Ferner ist beschrieben, dass die Anzeige- und Bedienvorrichtung weitere Bedieneinrichtungen umfassen kann oder mit solchen gekoppelt sein kann, über die ein Teil der Funktionen, die mit der Anzeige- und Bedienvorrichtung steuerbar sind, ebenfalls bedient werden können.

Wie sich aus den aufgeführten Druckschriften des Standes der Technik ergibt, besteht ein Bedarf, Multifunktionsanzeige- und Bedienvorrichtungen in Kraftfahrzeugen so auszugestalten, dass eine möglichst intuitive und einfache Bedienung der Fahrzeugsysteme und/oder Funktionen, die über die Multifunktionsanzeige- und Bedienvorrichtung gesteuert werden, möglich ist. Dies ist insbesondere notwendig, um eine möglichst fehlerfreie und zügige Bedienung, insbesondere auch durch den Fahrer während des Führens des Kraftfahrzeugs, zu ermöglichen.

Der Erfindung liegt somit das technische Problem zugrunde, Multifunktionsanzeige- und Bedienvorrichtungen sowie Verfahren zum Betreiben einer solchen Multifunktionsanzeige- und Bedienvorrichtung dahingehend weiterzuentwickeln, dass eine einfache Bedienung solcher Systeme möglich ist, die mindestens zwei Bedieneinrichtungen zum Erfassen von Nutzereingaben erfasst.

Das technische Problem wird durch eine Multifunktionsanzeige- und Bedienvorrichtung mit den Merkmalen des Patentanspruchs 1 sowie ein Verfahren mit den Merkmalen des Patentanspruchs 8 erfindungsgemäß gelöst. Vorteilhafte Ausgestaltungen der Erfindung ergeben sich aus den Unteransprüchen.

Hierbei liegt der Erfindung der Gedanke zugrunde, eine Darstellung von Informationen auf einer Anzeigefläche der Anzeigevorrichtung jeweils so auszugestalten, dass die eine Bedienung unterstützenden Informationen in einer so genannten Bediendarstellung jeweils angepasst an die jeweilige Bedieneinrichtung dargestellt werden, für welche eine Bedienintention erfasst ist. Eine erfindungsgemäße Multifunktionsanzeige- und Bedienvorrichtung ist somit so ausgestaltet, dass sie für mindestens zwei verschiedene Bedieneinrichtungen eine Bedienintention vor einer Betätigung der Bedieneinrichtung ermitteln kann, welche zur Nutzereingabe ausgeführt wird.

Insbesondere wird ein Multifunktionsanzeige- und Bediensystem in einem Kraftfahrzeug vorgeschlagen, das mindestens eine Anzeigevorrichtung zum Anzeigen von Informationen, eine Steuereinheit, die die Darstellung der Informationen auf einer Anzeigefläche der Anzeigevorrichtung steuert und mindestens zwei Bedieneinrichtungen zum Erfassen von Nutzereingaben umfasst, wobei die Steuereinheit ausgebildet ist, die Darstellung der Informationen, die für eine Unterstützung der Nutzereingaben auf der Anzeigefläche der Anzeigevorrichtung angezeigt werden, mittels unterschiedlicher Bediendarstellungen zu steuern, die jeweils angepasst an diejenige der mindestens zwei Bedieneinrichtungen ausgestaltet sind, über welche eine Nutzereingabe erfasst wird oder für die eine Bedienintention für eine Nutzereingabe erfasst ist. Somit werden die Informationen optimiert für eine Erfassung einer Nutzereingabe mittels der einen Bedieneinrichtung in einer für diese eine Bedieneinrichtung angepassten Bediendarstellung gesteuert.

Ein Verfahren zum Steuern eines Multifunktionsanzeige- und Bediensystems umfasst somit die Schritte: Ansteuern der Anzeigevorrichtung in der Weise, dass Informationen für eine Unterstützung der Nutzereingaben auf der Anzeigefläche zu Anzeige gebracht werden, wobei die Darstellung der Informationen auf der Anzeigefläche der Anzeigevorrichtung so gesteuert wird, dass die für eine Unterstützung der Nutzereingaben auf der Anzeigefläche der Anzeigevorrichtung zur Anzeige gebrachten Informationen, mittels unterschiedlicher Bediendarstellungen dargestellt werden, die entsprechend jeweils angepasst an diejenige der mindestens zwei Bedieneinrichtungen ausgestaltet werden, über welche eine Nutzereingabe erfasst wird oder für die eine Bedienintention für eine Nutzereingabe erfasst ist. Es wird somit eine für eine Erfassung der Nutzereingabe über die mindestens eine Bedieneinrichtung angepasste Bediendarstellung der angezeigten Informationen zur Anzeige gebracht wird.

Dieser Lösung liegt die Erkenntnis zugrunde, dass für unterschiedliche Bedieneinrichtungen unterschiedliche grafische Darstellungen von Informationen benötigt werden, um einen Nutzer bei einer Nutzereingabe zu unterstützen bzw. eine Nutzereingabe optimal, d. h. beispielsweise ohne Fehlbedienungen und mit einem möglichst geringen Betätigungsaufwand, erfassen zu können.

Ein Vorteil der erfindungsgemäßen Bereitstellung von unterschiedlichen Bedieneinrichtungen, die alternativ für eine Nutzereingabe genutzt werden können und somit redundant zur Verfügung stehen, besteht in der Tatsache, dass die verschiedenen Bedieneinrichtungen unterschiedliche Vorteile bieten, die beispielsweise bei einem Einsatz in einem Fahrzeug in unterschiedlichen Fahr- oder Nutzungssituationen von einem Nutzer bevorzugt werden. Eine Nutzung eines Drehstellers oder Drehdrückstellers führt während der Fahrt in einem Fahrzeug in der Regel zu weiniger Fehleingaben. Ferner sind bei Bedienungen durch Fahrzeugführer während des Führens des Fahrzeugs geringere Spurabweichungen als bei einer Verwendung beispielsweise eines Touchscreens oder eines Touchpads zu beobachten. Hingegen wird eine Touchscreen von Nutzern als intuitiver im Hinblick auf einen Betätigungsprozess wahrgenommen.

Der Nutzer kann somit situationsabhängig die jeweils geeignete Bedieneinrichtung auswählen und erhält auf der Anzeigefläche eine Bediendarstellung die angepasst an die jeweils gewählte Bedieneinrichtung ausgebildet ist.

Bei einer Bevorzugten Ausführungsform ist vorgesehen, dass eine entsprechende der unterschiedlichen Bediendarstellungen jeweils die dargestellten Informationen optimiert für eine Erfassung der Nutzereingabe mittels derjenigen der mindestens zwei Bedieneinrichtungen aufweist, über welche eine Nutzereingabe erfasst wird oder für die eine Bedienintention für eine Nutzereingabe erfasst ist. Die Bediendarstellung ist somit so ausgestaltet, dass die dargestellten Informationen einen Nutzer auf möglichst intuitive Weise bei der Nutzereingabe unterstützen. Beispielsweise werden die Informationen so dargestellt, dass die vorzunehmende Betätigungshandlung bei der Nutzereingabe möglichst einfach und ergonomisch angepasst an die jeweilige verwendete Bedieneinrichtung ausgeführt werden kann. Ein entsprechend ausgestaltetes Verfahren sieht somit vor, dass die Informationen in den Bediendarstellungen jeweils optimiert für eine Nutzereingabe über diejenige der mindestens zwei Bedieneinrichtungen, über welche eine Nutzereingabe erfasst wird oder für die eine Bedienintention für eine Nutzereingabe erfasst ist, angepasst dargestellt werden.

Eine Bedienintention wird in der Regel über eine oder mehrere Sensoreinheiten erfasst. Bei einer erfindungsgemäßen Ausführungsform ist somit mit der Steuereinheit mindestens eine Sensoreinheit zum Erfassen einer Bedienintention eines Nutzers für eine der mindestens zwei Bedieneinrichtungen vor einer Betätigung der einen der mindestens zwei Bedieneinrichtungen zur Nutzereingabe gekoppelt. Bei einem entsprechend ausgebildeten Verfahren werden Sensordaten mindestens einer Sensoreinheit erfasst und ausgewertet, um die Bedienintention eines Nutzers für eine der mindestens zwei Bedieneinrichtungen vor einer Betätigung der einen Bedieneinrichtungen zur Nutzereingabe zu erfassen.

Erfindungsgemäß wird eine Darstellung von virtuellen Bedieneinrichtungen und/oder Bedieneinrichtungszuordnungen in den mindestens zwei Bediendarstellungen angepasst an eine geometrische Ausgestaltung der Bedieneinrichtung vorgenommen, über welche eine Nutzereingabe erfasst wird oder für die eine Bedienintention für eine Nutzereingabe erfasst sind.

Erfindungsgemäß sind die mindestens eine Sensoreinheit und/oder mindestens eine weitere Sensoreinheit ausgebildet, zusätzlich eine Bedienintention für mindestens eine weitere der mindestens zwei Bedieneinrichtungen vor einer Betätigung dieser weiteren Bedieneinrichtung zur Nutzereingabe zu erfassen. Bei einem solchen Multifunktionsanzeige- und Bediensystem sind die mindestens eine Sensoreinheit und/oder mindestens eine weitere Sensoreinheit ausgebildet, zusätzlich eine Bedienintention für mindestens eine weitere der mindestens zwei Bedieneinrichtungen vor einer Betätigung dieser weiteren Bedieneinrichtung zur Nutzereingabe zu erfassen, und die Steuereinheit ausgebildet, die Darstellung der Informationen in mindestens einer weiteren für die Erfassung der Nutzereingaben mittels der mindestens einen weiteren Bedieneinrichtung angepassten Bediendarstellung zu steuern. Erfindungsgemäß werden die von der mindestens einen Sensoreinheit und/oder mindestens einen weiteren Sensoreinheit erfassten Daten ausgewertet, um zusätzlich eine Bedienintention mindestens einer weiteren Bedieneinrichtung vor einer Betätigung zur Nutzereingabe zu ermitteln, und die Darstellung der Informationen auf der Anzeigefläche der Anzeigevorrichtung so gesteuert, dass bei einer ermittelten Bedienintention für die mindestens eine weitere Bedieneinrichtung die Darstellung der Informationen optimiert angepasst für eine Erfassung der Nutzereingabe mittels der mindestens einen weiteren Bedieneinrichtung in mindestens einer weiteren Bediendarstellung erfolgt. Es ist somit erfindungsgemäß vorgesehen, dass die von der mindestens einen Sensoreinheit und/oder mindestens einer weiteren Sensoreinheit erfassten Daten ausgewertet werden, um zusätzlich eine Bedienintention mindestens einer weiteren Bedieneinrichtung vor einer Betätigung zur Nutzereingabe zu ermitteln.

Ist die eine Bedieneinrichtung beispielsweise als eine berührungsempfindliche Positionserfassungseinheit ausgebildet, so kann der erfassten Position eines Betätigungselements, beispielsweise eines Fingers eines Nutzers, unmittelbar eine Funktion und/oder Bedienoption zugeordnet sein. Wenn somit mindestens eine der mindestens zwei Bedieneinrichtungen als eine berührungsempfindliche Positionserfassungseinheit ausgebildet ist, so kann hiermit eine der Nutzereingaben erfasst werden, indem eine Berührposition der mindestens einen der mindestens zwei Bedieneinrichtungen durch ein Betätigungselement ermittelt wird. Ist die berührungsempfindliche Positionserfassungseinheit beispielsweise integral mit der Anzeigevorrichtung als Touchscreen ausgebildet, so ist eine intuitive Zuordnung einer Funktion oder Bedienoption über eine grafische Darstellung einer virtuellen Bedieneinrichtung auf der Anzeigefläche zu einem darüber liegenden Gebiet bzw. einer Berührposition unmittelbar im Darstellungsbereich der virtuellen Bedieneinrichtung auf einfache Weise möglich.

Ist hingegen eine der mindestens zwei Bedieneinrichtungen als Drehdrücksteller ausgebildet, so ist es vorteilhaft, einer auf der Anzeigefläche dargestellten Funktionen und/oder Bedienoptionen einen Cursor zuzuweisen, der eine grafische Hervorhebung einer der Funktionen und/oder Bedienoptionen bewirkt. Bei einer Ausführungsform ist vorgesehen, dass die mindestens eine weitere der mindestens zwei Bedieneinrichtungen eine drehende oder drückende Betätigung eines Betätigungselements erfasst. Über ein Drehen des Drehdrückstellers kann bei einer bevorzugten Ausführungsform ein zyklisches "Wandern" des Cursors über die einzelnen Funktionen und/oder Bedienoptionen bewirkt werden. Ist eine Funktion und/oder Bedienoption, welche ein Nutzer ausführen will, durch den Cursor markiert, so erfolgt eine Auswahl der Funktion und/oder Bedienoption vorzugsweise über eine drückende Betätigung des Drehdrückstellers. Besonders bevorzugt erfolgt die Darstellung der einzelnen Funktionen und/oder Bedienoptionen in der dem Drehdrücksteller zugeordneten Bediendarstellung kreisförmig, so dass eine Geometrie der Bedieneinrichtung mit einer Geometrie der Bediendarstellung korrespondiert.

Während bei einer Verwendung eines Drehdrückstellers ein Cursor dargestellt werden muss, ist dies beispielsweise bei einem berührungsempfindlichen Positionserfassungssensor als Bedieneinrichtung nicht notwendig, sofern dieser mit der Anzeigefläche integral als Touchscreen ausgebildet ist. Wird hingegen ein berührungsempfindlicher Positionserfassungssensor als Bedieneinrichtung verwendet, der als Touchpad getrennt von der Anzeigefläche ausgebildet ist, kann es ebenfalls sinnvoll sein, einen punktförmigen oder fadenkreuzartigen Cursor darzustellen, der über eine berührende Betätigung des Touchpads durch ein Betätigungselement des Nutzers, insbesondere einen Finger, auf der Anzeigefläche relativ zu den dargestellten Funktionen und/oder Bedienoptionen bewegt werden kann. Bei einigen Ausführungsformen ist vorgesehen, das bei einer Berührung des Touchpads der Cursor einer Bedieneinrichtung zugewiesen wird und anschließend über gleitende, streifende oder ähnliche Bewegungen des Betätigungselements verschoben oder anderweitig positioniert und einer gewünschten Bedieneinrichtung zugeordnet wird. Anschließend kann dann die Auswahl der Bedieneinrichtung, der der Cursor auf diese Weise zugeordnet ist, erfolgen. Hierfür kann beispielsweise eine doppelte Berührung des Touchpads innerhalb einer vorgegebenen Zeitspanne vorgesehen sein und ausgeführt werden.

Bei einer beispielsweise als Touchpad ausgebildeten Bedieneinrichtung, bei der eine flächig ausgedehnte berührungsempfindliche Positionserfassungseinheit getrennt und nicht vor der Anzeigefläche der Anzeigevorrichtung ausgebildet und angeordnet ist, sind bei einer bevorzugten Ausführungsform Positionen auf der als berührungsempfindliche Positionserfassungseinheit ausgebildet Bedieneinrichtung mit Positionen auf der Anzeigefläche assoziiert. Einem Nutzer wird somit eine einfache Orientierung ermöglicht. Gegebenenfalls kann eine Benutzerschnittstelle in einem solchen Fall sogar auf einen Einsatz eines Cursors oder eines durch eine grafische Hervorhebung kenntlich gemachten Fokus verzichten.

Wird wiederum beispielsweise eine Bedieneinrichtung verwendet, welches als Tastenfeld mit mehreren, beispielsweise matrixartig angeordneten Tasten ausgebildet ist, so kann eine Zuordnung der Funktionen und/oder Bedienoptionen zu den einzelnen Tasten des Tastenfelds für einen Nutzer durch eine grafische Nachbildung des Tastenfelds auf der Anzeigefläche visualisiert und verdeutlicht werden. Bei einer Ausführungsform wird somit eine drückende oder berührende Betätigung einer Bedientaste eines Tastenfelds erfasst.

Bei einer bevorzugten Ausführungsform der Erfindung ist vorgesehen, dass der mindestens einen Bedieneinrichtung die mindestens eine Sensoreinheit und der mindestens einen weiteren Bedieneinrichtung die mindestens eine weitere Sensoreinheit jeweils zum Erfassen der Bedienintention zugeordnet sind. Dies bedeutet, dass bei einer bevorzugten Ausführungsform jeder der Bedieneinrichtungen mindestens ein Sensor zugeordnet ist, der für eine Erfassung einer Bedienintention vorgesehen ist. Als Sensoren für eine Erfassung einer Bedienintention eignen sich insbesondere Sensoren, die eine kapazitive Kopplung des Betätigungselements des Nutzers an die jeweilige Bedieneinrichtung oder einen Teil der Bedieneinrichtung auswerten. Andere vorteilhafte Sensoren können aktiv elektromagnetische Strahlung, beispielsweise im infraroten Wellenlängenbereich, emittieren und eine Reflexion und/oder Streuung der emittierten elektromagnetischen Strahlung detektieren. Auch nach anderen Prinzipien arbeitende Sensoren, insbesondere optische Sensoren können für eine Annäherungserkennung genutzt werden. Grundsätzlich sind alle Sensoreinheiten und Sensorsysteme einsetzbar, die eine Annäherung des Betätigungselements an eine der Bedieneinrichtungen erfassen können. Bei Bedieneinrichtungen, die nicht automatisch bei einer Berührung betätigt werden, wie dies beispielsweise bei einem Drehdrücksteller der Fall ist, können die Sensoreinheiten auch als berührungssensitive Sensoren ausgebildet sein, die eine Bedienintention erfassen.

Einzelnen Bedieneinrichtungen können auch mehrere Sensoreinheiten zugeordnet sein, die vorzugsweise unterschiedliche Betätigungszustände erfassen. Beispielsweise können sowohl eine Sensoreinheit für eine berührungslose Annäherungserfassung als auch eine Sensoreinheit zur Detektion einer Berührung der Bedieneinrichtung vorgesehen sein.

Bei einer Ausführungsform ist vorgesehen, dass die Sensoreinheit in die mindestens eine Bedieneinrichtung integriert ist und/oder die weitere Sensoreinheit in die mindestens eine weitere Bedieneinrichtung integriert ist. Häufig kann eine kapazitive Kopplung eines Betätigungselements an einer Signalleitung ausgewertet werden, über die auch die bei der Betätigung erfassten Signale für die Nutzereingabe übertragen werden. Eine Integration der Sensoreinheiten in die Bedieneinrichtungen bewirkt ferner eine Einsparung von Bauraum.

Bei einer bevorzugten Ausführungsform findet ein Wechsel zwischen der einen Bediendarstellung zu der anderen Bediendarstellung animiert statt. Dies bedeutet, dass für einen Nutzer eine Umwandlung der einen Bediendarstellung mittels mindestens einer Zwischendarstellung erfolgt, die weder der einen noch der anderen Bediendarstellung gleicht. Nicht mehr benötigte Elemente können beispielsweise ausgeblendet werden, virtuelle Bedieneinrichtungen in ihrer Größe und/oder Anordnung verschoben werden, ein Cursor ein- oder ausgeblendet werden usw.

Vorzugsweise umfasst das Multifunktionsanzeige- und Bediensystem Bedieneinrichtungen unterschiedlichen Typs. Dies bedeutet, dass unterschiedliche Betätigungshandlungen beim Erfassen der Nutzereingabe erfasst und/oder ausgewertet werden. Während mit einem Drehdrücksteller beispielsweise eine Drehung bzw. ein Niederdrücken erfasst wird, wird mit einer berührungsempfindlichen Positionserfassungseinheit eine Berührung und/oder eine gleitende berührende Bewegung über eine Sensorfläche, beispielsweise eine Anzeigefläche eines Touchscreens oder die Fläche eines Touchpads erfasst. Ebenso kann bei einigen Ausführungsformen ausgewertet werden, mit wie vielen Fingern eine Berührung vorgenommen wird, mit welcher Geschwindigkeit eine gleitende Bewegung erfolgt usw.

Bei einer Ausführungsform ist vorgesehen, dass auf der Anzeigefläche die Bediendarstellung zur Anzeige gebracht wird, die angepasst für diejenige der mindestens zwei Bedieneinrichtungen ist, für welches zuletzt eine Bedienintention ermittelt ist. Dies bedeutet, dass die Bediendarstellung sich nicht verändert, wenn das Betätigungselement nach einer Betätigung oder nach einem Abbruch einer Betätigung wieder von der Bedieneinrichtung entfernt wird.

Bei einer anderen Ausführungsform ist vorgesehen, dass die Informationen in einer Vorgabebediendarstellung oder einer Informationsvermittlungsdarstellung zur Anzeige gebracht werden, wenn keine Bedienintention erkannt ist. Bei einigen Ausführungsformen findet ein Wechsel in die Vorgabebediendarstellung oder die Informationsvermittlungsdarstellung nach Ablauf einer vorgegebenen Zeitspanne statt, nach der eine Betätigung oder eine Bedienintention nicht mehr erfasst sind.

Wechselt der Nutzer die zur Nutzereingabe verwendete Bedieneinrichtung, so ändert sich entsprechend die Bediendarstellung. Ist die Anzeigevorrichtung als Dual- oder Mutiple-View-Display ausgebildet, die so betreibbar ist, dass bei deren Betrachtung aus unterschiedlichen Betrachtungswinkeln unterschiedliche Informationen wahrnehmbar sind, so ist bei einer Ausführungsform vorgesehen , dass bei einer Bedienung durch nur einen Nutzer für alle Betrachtungswinkel die Bediendarstellung zur Anzeige gebracht wird, die mit der Bedieneinrichtung korrespondiert, über die eine Nutzereingabe aktuell erfasst wird oder für die eine Bedienintention erfasst ist oder wird. Wir die Annährung eines Betätigungselements eines weiteren Nutzers an eine andere Bedieneinrichtung oder eine Betätigung der anderen Bedieneinrichtung durch den weiteren Nutzer erfasst, so wird bei einer Ausführungsform eine andere Bediendarstellung angepasst an die andere Bedieneinrichtung, dass heißt mit Informationen zur Unterstützung der Nutzereingabe über die andere Bedieneinrichtung, zusätzlich so zur Anzeige gebracht, dass diese andere Bediendarstellung aus dem Betrachtungswinkel wahrnehmbar ist, unter dem der weitere Nutzer die Anzeigevorrichtung betrachtet.

Nachfolgend wird die Erfindung anhand eines bevorzugten Ausführungsbeispiels unter Bezugnahme auf eine Zeichnung näher erläutert. Hierbei zeigen:
- Fig. 1: eine schematische Darstellung eines Kraftfahrzeugs mit einem Multifunktionsanzeige- und Bediensystem;
- Fig. 2a: eine schematische Darstellung einer Bediendarstellung, angepasst für eine Bedienung einer Bedieneinrichtung, welches als berührungsempfindliche Positionserfassungseinheit ausgebildet ist und mit einer Anzeigevorrichtung als Touchscreen ausgebildet ist;
- Fig. 2b: eine schematische Darstellung einer anderen Bediendarstellung ähnlich zu der nach Fig. 2a, die jedoch für eine Bedienung durch einen Drehdrücksteller angepasst ist;
- Fig. 3a: eine schematische Bediendarstellung, welche für eine Unterstützung einer Ortseingabe bei eine satellitengestützten Fahrzeugnavigation auf einer Anzeigefläche zu Anzeige gebracht wird, wenn die Anzeigevorrichtung als Touchscreen ausgebildet ist und der Touchscreen als Bedieneinrichtung zur Nutzereingabe verwendet wird;
- Fig. 3b: eine schematische Bediendarstellung, welche für eine Unterstützung einer Ortseingabe bei eine satellitengestützten Fahrzeugnavigation auf einer Anzeigefläche zu Anzeige gebracht wird, wenn ein Drehdrücksteller als Bedieneinrichtung zur Nutzereingabe verwendet wird; und
- Fig. 3c: eine schematische Bediendarstellung, welche für eine Unterstützung einer Ortseingabe bei eine satellitengestützten Fahrzeugnavigation auf einer Anzeigefläche zu Anzeige gebracht wird, wenn ein Touchpad als Bedieneinrichtung zur Nutzereingabe verwendet wird;
- Fig. 4a: eine schematische Ansicht einer Anzeigevorrichtung eines Multifunktionsanzeige- und Bediensystems mit einer Vorgabebediendarstellung oder einer Informationsvermittlungsdarstellung für eine Mediaplayerfunktion;
- Fig. 4b: eine schematische Ansicht der Anzeigevorrichtung des Multifunktionsanzeige-und Bediensystems nach Fig. 4a, wobei die Bediendarstellung angepasst für eine Nutzereingabe über einen in der Anzeigevorrichtung ausgebildeten Touchscreen dargestellt ist;
- Fig. 4c: eine schematische Ansicht der Anzeigevorrichtung des Multifunktionsanzeige-und Bediensystems nach Fig. 4a, wobei die Bediendarstellung angepasst für eine Nutzereingabe über einen Touchpad dargestellt ist;
- Fig. 4d: eine schematische Ansicht der Anzeigevorrichtung des Multifunktionsanzeige-und Bediensystems nach Fig. 4a, wobei die Bediendarstellung angepasst für eine Nutzereingabe über einen Drehdrücksteller dargestellt ist; und
- Fig. 5: eine schematische Darstellung einer Benutzerschnittstellenlogik, die die Anzeige der Bediendarstellungen festlegt.

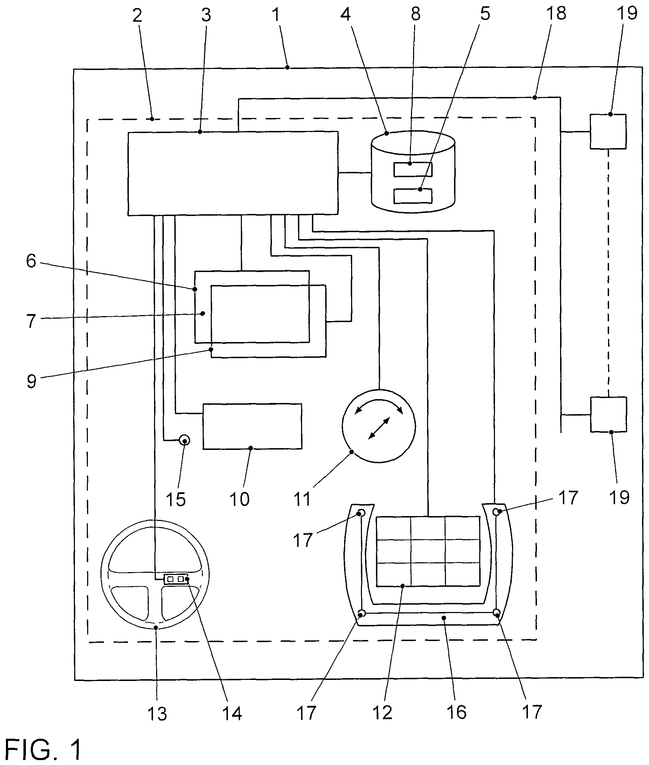

In Fig. 1 ist schematisch ein Kraftfahrzeug 1 dargestellt. Das Kraftfahrzeug 1 umfasst ein Multifunktionsanzeige- und Bediensystem 2. Das Multifunktionsanzeige- und Bediensystem 2 umfasst eine Steuereinheit 3, die mit einem Speicher 4 gekoppelt ist. Vorzugsweise ist die Steuereinheit 3 als Mikroprozessor ausgeführt oder umfasst einen solchen. Der Speicher 4 ist bei einigen Ausführungsformen in die Steuereinheit 3 integriert. In der Speichereinheit 4 ist vorzugsweise ein Programmcode 5 abgelegt, der auf dem Mikroprozessor (nicht dargestellt) der Steuereinheit 4 ausführbar ist und eine Funktionalität des Multifunktionsanzeige- und Bediensystems 2 bereitstellt. Die Steuereinheit 3 ist mit einer Anzeigevorrichtung 6 gekoppelt, die eine Anzeigefläche 7 aufweist. Die Steuereinheit 3 steuert eine Darstellung von Informationen auf der Anzeigefläche 7. Hierzu benötigte Informationen sind beispielsweise als Grafikinformationen 8 vorzugsweise ebenfalls in dem Speicher 4 abgelegt.

Die Anzeigevorrichtung 6 ist gemeinsam mit einer berührungsempfindlichen Positionserfassungseinheit 9 als Touchscreen ausgebildet. Die berührungsempfindliche Positionserfassungseinheit 9 stellt eine Bedieneinrichtung dar, über welche Nutzereingaben erfassbar sind. Als weitere Bedieneinrichtungen sind mit der Steuereinheit 3 ein Touchpad 10, ein Drehdrücksteller 11, ein Tastenfeld 12 sowie ein in ein Lenkrad 13 integrierter Multifunktionsschalter 14 vorhanden. Dem Touchpad 10 ist ein getrennt ausgebildeter Annäherungssensor 15 zugeordnet. Dem Multifunktionstastenfeld 14 ist eine berührungslose Positionserfassungseinheit 16 zugeordnet, die eine Position eines Betätigungselements, beispielsweise eines Fingers, berührungslos dreidimensional im Raum vor und benachbart zu dem Tastenfeld 12 erfassen kann. Die berührungsempfindliche Positionserfassungseinheit 9, der Drehdrücksteller 11 sowie der Multifunktionsschalter 14 sind so ausgebildet, dass sie kapazitiv eine Annäherung eines Betätigungselements, beispielsweise eines Fingers eines Nutzers, als Bedienintention erfassen können.

Die berührungslos messende Positionserfassungseinheit 16 ist beispielsweise so ausgestaltet, dass diese mehrere Sensoren 17 umfasst, die einen Abstand des Betätigungselements von dem entsprechenden Sensor 17 ermitteln. Hierzu können die einzelnen Sensoren 17 beispielsweise elektromagnetische Strahlung im infraroten Wellenlängenbereich emittieren und eine Reflexion dieser Strahlung beispielsweise über eine Fotodiode detektieren. Durch eine geschickte Anordnung der einzelnen Sensoren 17 der berührungslos messenden Positionserfassungseinheit 16 ist es möglich, über eine Triangulation die Position des Betätigungselements dreidimensional im Raum zu ermitteln und hierüber eine Annäherung des Betätigungselements an das Tastenfeld 12 zu detektieren.

Die Steuereinheit 3 ist ausgebildet, Informationen, die eine Erfassung einer Nutzereingabe unterstützen, jeweils angepasst in einer Bediendarstellung so darzustellen, dass diese eine Nutzererfassung durch eine der Bedieneinrichtungen optimal ermöglicht, an welches eine Nutzerannäherung, d.h. für welches eine Bedienintention, erkannt ist. Nähert der Nutzer beispielsweise ein Betätigungselement, beispielsweise seinen Finger (nicht dargestellt), der Anzeigefläche bzw. der berührungsempfindlichen Positionserfassungseinheit 9 an, so werden für die einzelnen bedienbaren Funktionen und/oder Bedienoptionen virtuelle Bedieneinrichtungen auf der Anzeigefläche 7 dargestellt, die für eine berührende Betätigung optimal hinsichtlich ihrer Größe und Anordnung, d.h. beispielsweise nicht überlappend, angeordnet dargestellt sind. Wird hingegen eine Bedienintention für den Drehdrücksteller 11 erkannt, so werden die Funktionen und/oder Bedienoptionen entlang eines Kreises, welcher in der Regel nicht dargestellt ist, angeordnet und einer Funktion und/oder einer Bedienoption ein Cursor zugeordnet, der beispielsweise als Rahmen farblich hervorgehoben um die entsprechende Funktion und/oder Bedienoption dargestellt wird. Ein Wechsel von einer Bediendarstellung zu einer anderen Bediendarstellung, der vorgenommen wird, wenn eine Bedienintention für eine andere Bedieneinrichtung erfasst wird, wird vorzugsweise animiert ausgeführt. Dies bedeutet, dass für den Nutzer eine Art Filmsequenz auf der Anzeigefläche sichtbar ist, wenn eine neue Bedienintention erkannt ist.

Ist eine Nutzereingabe erfasst, so erzeugt die Steuereinheit 3 ein Steuersignal oder einen Steuerbefehl, der über einen Fahrzeugdatenbus 18 an eines der Fahrzeugsysteme 19 übertragen wird, die über das Multifunktions- und Bediensystem 2 bedien- und steuerbar sind.

Bei einer Ausführungsform ist vorgesehen, dass auf der Anzeigefläche eine Vorgabebediendarstellung angezeigt wird, die optimiert für eine Nutzererfassung einer der Bedieneinrichtungen ausgebildet ist, welches beispielsweise am häufigsten durch den Nutzer verwendet wird.

Bei einer Ausführungsform ist vorgesehen, dass die Vorgabebediendarstellung anhand einer Auswertung der vorgenommenen Betätigungshandlungen durch den Nutzer festgelegt wird. Hierbei wird die Bediendarstellung ausgewählt, die der Bedieneinrichtung zugeordnet ist, welches am häufigsten durch den Nutzer verwendet wird, um eine Nutzereingabe vorzunehmen.

Bei einer anderen Ausführungsform kann vorgesehen sein, dass auf der Anzeigefläche eine Informationsvermittlungsdarstellung angezeigt wird, die für eine Vermittlung von Informationen und nicht für eine Bedienung optimiert ist, wenn keine Bedienintention für eine der mehreren Bedieneinrichtungen erfasst ist.

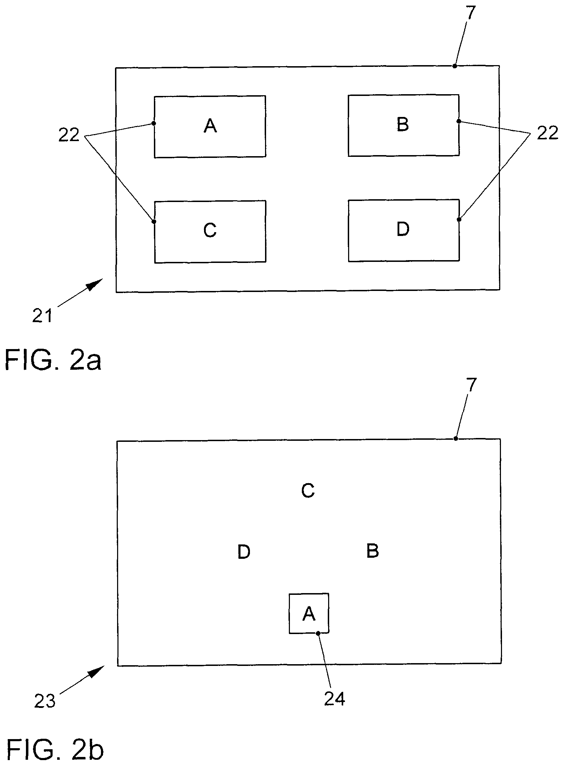

In Fig. 2a ist beispielhaft eine Ansicht einer Anzeigefläche 7 dargestellt, die eine Bediendarstellung 21 zeigt, in der die einzelnen Funktionen und/oder Bedienoptionen A-D für eine Bedienung durch eine berührungsempfindliche Positionserfassungseinheit dargestellt sind, welche mit der Anzeigefläche integral als Touchscreen ausgebildet ist. Die einzelnen Funktionen und/oder Bedienoptionen A-D sind als virtuelle Bedieneinrichtungen 22 dargestellt, die gleichmäßig und jeweils eine gleiche Größe aufweisend über die Anzeigefläche 7 verteilt dargestellt sind.

In Fig. 2b ist eine andere Bediendarstellung 23 schematisch dargestellt, bei der dieselben Funktionen und/oder Bedienoptionen A-D wie bei der Bediendarstellung 21 nach Fig. 2a angezeigt sind. Die andere Bediendarstellung 23 ist jedoch für eine Betätigung durch einen Drehdrücksteller angepasst. Die einzelnen Funktionen und/oder Bedienoptionen A-D sind entlang eines nicht dargestellten Kreises angeordnet. Um eine Funktion A ist ein rahmenartiger Cursor 24 dargestellt, der diejenige Funktion A markiert, welche durch eine drückende Betätigung des Drehdrückstellers angewählt werden kann. Über ein Drehen des Drehdrückstellers kann eine Zuordnung des Cursors 24 zu den anderen entlang des Kreises angeordneten Funktionen und/oder Bedienoptionen B-D bewirkt werden.

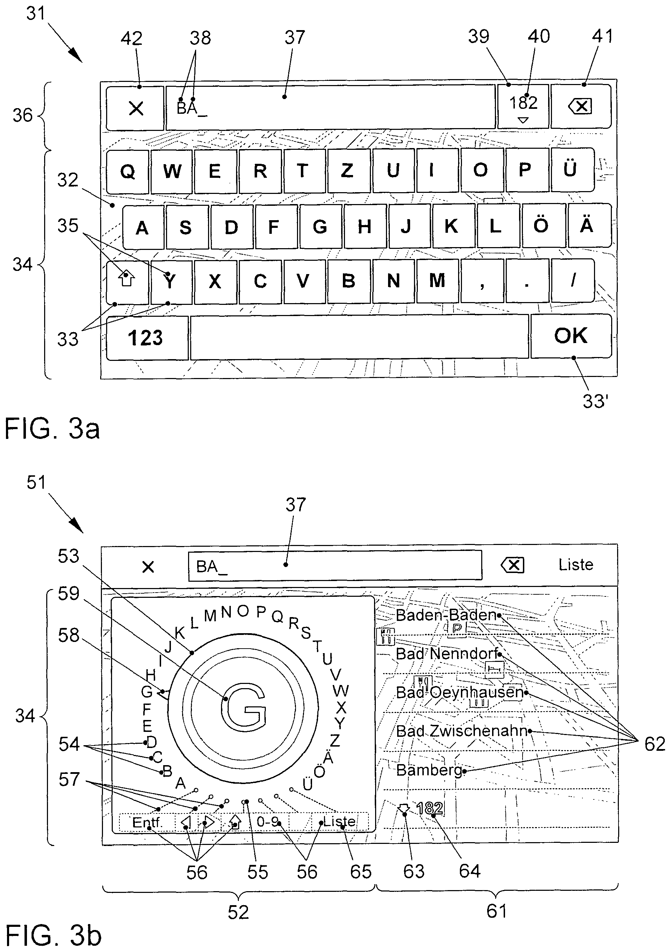

In Fig. 3a bis 3c sind unterschiedliche Bediendarstellungen eines Multifunktionsanzeige- und Bediensystems schematisch dargestellt.

In Fig. 3a ist eine schematische Bediendarstellung 31 gezeigt, welche beispielsweise für eine Unterstützung einer Ortseingabe bei einer satellitengestützten Navigation auf einer Anzeigefläche zur Anzeige gebracht wird, wenn die Anzeigevorrichtung als Touchscreen ausgebildet ist und der Touchscreen als Bedieneinrichtung zur Erfassung der Nutzereingabe verwendet wird. Über einer im Hintergrund dargestellten Navigationskarte 32 sind Tasten 33 einer virtuellen Tastatur in einem Hauptabschnitt 34 eingeblendet. Den einzelnen Tasten 33 sind Zeichen oder Funktionen zugeordnet, wie sie einem Nutzer von einer Computertastatur oder einer Schreibmaschine her bekannt sind. Das der jeweiligen Taste zugeordnete Symbol oder die zugeordnete Funktion sind jeweils über eine grafische Darstellung 35 repräsentiert.

Über ein Berühren der virtuellen Tasten 33 kann somit ein Name eines Zielortes buchstabenweise eingegeben bzw. erfasst werden. In einem oberen Bereich 36 der Bediendarstellung 31 ist ein Eingabefeld 37 vorgesehen, in dem die bereits eingegebenen Buchstaben 38 erscheinen. Rechts neben dem Eingabefeld 37 ist ein virtueller Klapplistenknopf 39 dargestellt, dessen numerische Beschriftung 40 angibt, wie viele Zielorte das Navigationssystem kennt, die mit den bereits eingegebenen Buchstaben 38 beginnen. Im dargestellten Ausführungsbeispiel kennt das Navigationssystem 182 Ziele, die mit den Buchstaben "BA" beginnen. Wird der Klapplistenknopf 39 von dem Nutzer berührt, so wird auf der Anzeigevorrichtung eine Liste zur Anzeige gebracht, die die Zielorte anzeigt, die mit den bereits angegebenen Buchstaben 38 beginnen.

Im oberen Bereich 36 ist ferner eine virtuelle Löschtaste 41 vorgesehen, mit der zuvor eingegebene Buchstaben 38 schrittweise gelöscht werden können. Ferner ist im oberen Bereich 36 eine virtuelle Rücksprungtaste 42 vorgesehen, um eine Darstellung der Bediendarstellung 31 zu beenden, so dass die Navigationskarte 32 vorzugsweise vollflächig zur Anzeige gebracht wird. Die eingeblendeten virtuellen Tasten 33 umfassen eine "OK"-Taste 33', um einen vollständig in dem Eingabefeld 37 dargestellten Zielort als Zielpunkt für eine satellitengestützte Navigation auszuwählen. Es versteht sich für den Fachmann, dass die Eingabe eines Navigationsziels lediglich eine beispielhafte Nutzereingabe darstellt. Beliebige andere Informationen können auf diese Weise eingegeben bzw. erfasst werden.

In Fig. 3b ist eine weitere Bediendarstellung 51 des Multifunktionsanzeige- und Bediensystems schematisch gezeigt, die auf der Anzeigefläche zur Anzeige gebracht wird, wenn der Nutzer für die Nutzereingabe statt des Touchscreens einen Drehdrücksteller verwendet. In einem linken Teil 52 des Hauptabschnitts 34 der Bediendarstellung 51 ist die aktuelle Stellung des Drehdrückstellers 53 grafisch dargestellt. Um den Drehdrücksteller 53 herum sind die einzelnen Buchstaben 54 des Alphabets auf einem Kreis dargestellt. Zusätzlich sind einzelnen Positionen 55 auf dem Kreis Funktionen zugeordnet, die über Funktionsdarstellungen 56 repräsentiert sind, welche über Linien 57 mit den Positionen 55 verbunden sind, denen sie zugeordnet sind. Ein Pfeil 58 zeigt an, welcher Buchstabe 54 bzw. welche Position 55 und hierüber Funktion bzw. Funktionsdarstellung 56 aktuell ausgewählt ist. Der ausgewählte Buchstabe 54 bzw. die ausgewählte Funktionsdarstellung 56 wird vergrößert in einer Mitte 59 des in dem Kreis dargestellten Drehdrückstellers 53 angezeigt. Durch ein Drehen des Drehdrückstellers 53 kann der Pfeil 58 und somit der Buchstabe 54 bzw. die entsprechende für die Funktionsdarstellung 56 repräsentierte Funktion angewählt und über ein Niederdrücken des Drehdrückstellers ausgewählt werden. Im rechten Teil 61 des Hauptteils 34 sind in einer Liste einzelne Ziele 62 aufgeführt, die mit den Buchstaben beginnen, die in dem Eingabefeld 37 angezeigt sind und bereits eingegeben bzw. erfasst wurden. Ein Pfeil 63 mit einer daneben angeordneten numerischen Angabe 64 deutet an, dass weitere 182 Ziele existieren, die mit der Buchstabenkombination "BA" beginnen. Wird die Position 55, die mit der Funktionsdarstellung "Liste" 65 korrespondiert, durch den Nutzer ausgewählt, so erscheint in der Liste der Ziele 62 ein Cursor (hier nicht dargestellt), der eines der Ziele grafisch hervorhebt und durch ein Drehen des Drehdrückstellers in der Liste der Ziele bewegt werden kann, um eines der Ziele anzuwählen und durch ein anschließendes Niederdrücken auszuwählen.

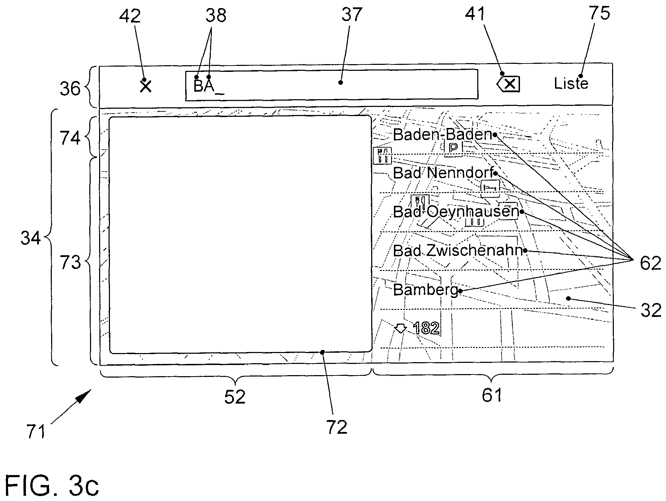

In Fig. 3c ist eine weitere Bediendarstellung 71 gezeigt, die auf der Anzeigefläche des Multifunktionsanzeige- und Bediensystems zur Anzeige gebracht wird, wenn der Nutzer ein Touchpad, d.h. eine berührungsempfindliche Positionserfassungseinheit, zur Eingabe nutzt, die nicht vor der Anzeigefläche der Anzeigevorrichtung angeordnet ist. Im linken Teil 52 des Hauptabschnitts 34 der Bediendarstellung 71 ist ein Touchpad 72 schematisch dargestellt. Diese Touchpaddarstellung gliedert sich erneut in einen Touchpadhauptabschnitt 73 und einen oberen Bereich 74 des Touchpads 72. Zwischen den Positionen auf dem normalen Touchpad und den Darstellungspositionien des dargestellten Touchpads 72 existiert eine 1 : 1 Zuordnung. In dem Bereich des Touchpads, der mit dem Touchpadhauptabschnitt 73 korrespondiert, schreibt der Nutzer beispielsweise mit seinem Finger einzelne Buchstaben. Die Erfassungsvorrichtung erfasst die einzelnen Berührpositionen und ermittelt hieraus den eingegebenen Buchstaben, der dann anschließend im Eingabefeld 37 angezeigt wird. Bei einigen Ausführungsformen wird die Spur der Berührpositionen grafisch in dem Touchpadhauptabschnitt 73 dargestellt, so dass der Nutzer das eingegebene Zeichen selber optisch kontrollieren kann. Dies ist insbesondere dann hilfreich, wenn Buchstaben eingegeben werden sollen, deren Schriftzug aus mehreren Teilabschnitten besteht, die an unterschiedlichen Aufsetzpunkten beginnen. Beispielsweise sei hier der Großbuchstabe A genannt, für den ein Nutzer zunächst eine Kontur eines spitzen Winkels abfährt und anschließend einen Querbalken in dem Winkel abfährt.

Im rechten Bereich 61 sind erneut die bekannten Ziele 62 in einer Liste dargestellt, die mit den bereits eingegebenen Buchstaben "BA" beginnen und dem Navigationssystem bekannt sind.

Den in dem oberen Bereich 36 der Bediendarstellung 71 dargestellten Elementen, der virtuellen Rücksprungtaste 42, dem Eingabefeld 37, der virtuellen Löschtaste 41 sowie eine virtuelle Listenanwahltaste 75 sind jeweils entsprechende Abschnitte des oberen Bereichs des Touchpads und der Darstellung des Touchpads 72 entsprechend der grafischen Darstellung in dem oberen Bereich 36 zugeordnet. Hierüber ist es dem Nutzer möglich, über eine Berührung der entsprechenden Position in dem oberen Bereich des Touchpads eine entsprechende virtuelle Taste 42, 41, 75 oder ein Element, welches in dem oberen Bereich 36 der Bediendarstellung 71 dargestellt ist, an- oder auszuwählen. Berührt der Nutzer beispielsweise den oberen Bereich des Touchpads ganz rechts, wird die virtuelle Listenauswahltaste 75 betätigt. Hierdurch wird eine Umschaltung in einen Listenauswahlmodus erreicht, in dem einem der Ziele 62 ein Cursor zugeordnet wird, der beispielsweise durch eine grafische Hervorhebung dargestellt wird. Über eine berührende Auf- und Abwärtsbewegung in dem mit dem Touchscreenhauptabschnitt 73 korrespondierenden Bereich des realen Touchpads kann der Nutzer den Cursor in der Liste der bekannten Ziele 62 verschieben und so entsprechend eines der bekannten Ziele auswählen. Über eine nachfolgende klopfende Berührung des Touchpads kann dann beispielsweise das Ziel ausgewählt werden, welches durch den Cursor aktuell hervorgehoben ist.

Es versteht sich für den Fachmann, dass die beschriebene Benutzerschnittstelle für die Eingabe eines Zielortes hier lediglich beispielhaften Charakter hat.

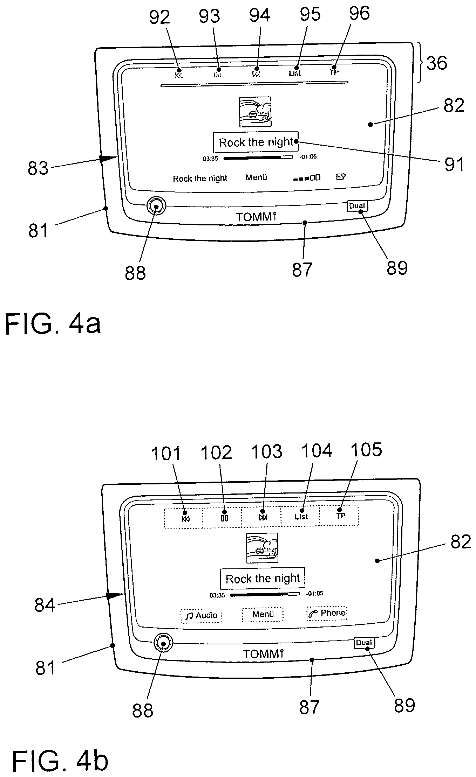

In den Fig. 4a bis 4d ist jeweils eine Anzeige- und Bedieneinrichtung 81 gezeigt. Diese umfasst eine Anzeigevorrichtung. Auf deren Anzeigefläche 82 sind entsprechend in den Fig. 4a bis 4d eine Vorgabebediendarstellung 83 sowie unterschiedliche Bediendarstellungen 84-86 für eine Bedienung eines Multimediasystems gezeigt. Vor der Anzeigefläche 82 ist eine transparent ausgebildete berührungsempfindliche Positionserfassungseinheit (nicht sichtbar) angeordnet. Diese bildet zusammen mit der Anzeigevorrichtung somit eine als Touchscreen ausgebildete Bedieneinrichtung.

In einem Rahmen 87 sind in Hardware ausgebildete Bedieneinrichtungen, beispielsweise ein Drehsteller 88 und ein Tastschalter 89 ausgebildet.

In Fig. 4a ist auf der Anzeigefläche 82 der Anzeigevorrichtung die Vorgabebediendarstellung 83 gezeigt, die dargestellt wird, wenn noch keine Bedienintention für eine der vorhandenen Bedieneinrichtungen ermittelt ist. In der Vorgabebediendarstellung 83 sind in der dargestellten Ausführungsform Informationen 91 über einen wiedergegebenen Titel, dessen Abspieldauer sowie eine Ansicht eines Covers des zugehörigen Datenträgers abgebildet. In einem oberen Bereich 36 der Anzeigefläche sind mögliche Bedienoptionen durch grafische Symbole 92-96 angedeutet, die halbtransparent dargestellt sind, was über eine Strichelung angezeigt ist. Bei der dargestellten Ausführungsform umfasst das Multifunktionsanzeige- und Bediensystem als Bedieneinrichtung den Touchscreen, ein Touchpad sowie einen in der Regel von dem Drehsteller 88 verschiedenen Drehdrücksteller. Wird eine Bedienintention für eine Nutzereingabe über den Touchscreen, d.h. die mit der Anzeigevorrichtung gekoppelte berührungsempfindliche Positionserfassungseinheit, erfasst, so wird die Bediendarstellung 84 angezeigt, die in Fig. 4b dargestellt ist. Neben Informationen 91 sind verschiedene virtuelle Bedienelemente 101-105 eingeblendet, die mit den Bedienoptionen korrespondieren, die in Fig. 4a dargestellt sind.

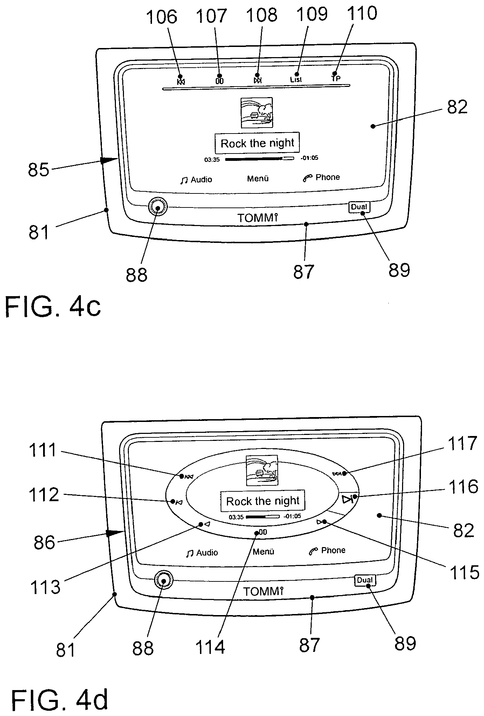

In Fig. 4c ist eine Bediendarstellung 85 dargestellt, die zur Anzeige gebracht wird, wenn der Nutzer eine Nutzereingabe über das Touchpad vornimmt bzw. eine Bedienintention für das Touchpad erfasst ist. Den über nicht transparente grafische Symbole 106-110 dargestellten Bedienfunktionen sind erneut Bereiche des Touchpads zugeordnet. Berührt der Benutzer den Touchpad an der entsprechenden Position bzw. dem entsprechenden Bereich, wird beispielsweise das entsprechende Symbol grafisch hervorgehoben. Eine anschließende klopfende Betätigung an derselben Position bzw. in demselben Bereich ermöglicht dann eine Auswahl der Funktion, die dem entsprechenden grafisch hervorgehobenen Symbol zugeordnet ist.

In Fig. 4d ist eine Bediendarstellung 86 dargestellt, die zur Anzeige gebracht wird, wenn der Nutzer die Nutzereingabe über den Drehdrücksteller vornimmt. Das durch die aktuelle Stellung des Drehdrückstellers ausgewählte Symbol 116, dem erneut eine Funktion zugeordnet ist, ist grafisch hervorgehoben. Durch ein Niederdrücken des Drehdrückstellers kann die entsprechende Funktion ausgewählt werden. Die einzelnen den Funktionen zugeordneten Symbole 111-117 sind in dieser Bediendarstellung auf einem virtuell im Raum verkippten Kreis bzw. Kreissegment dargestellt.

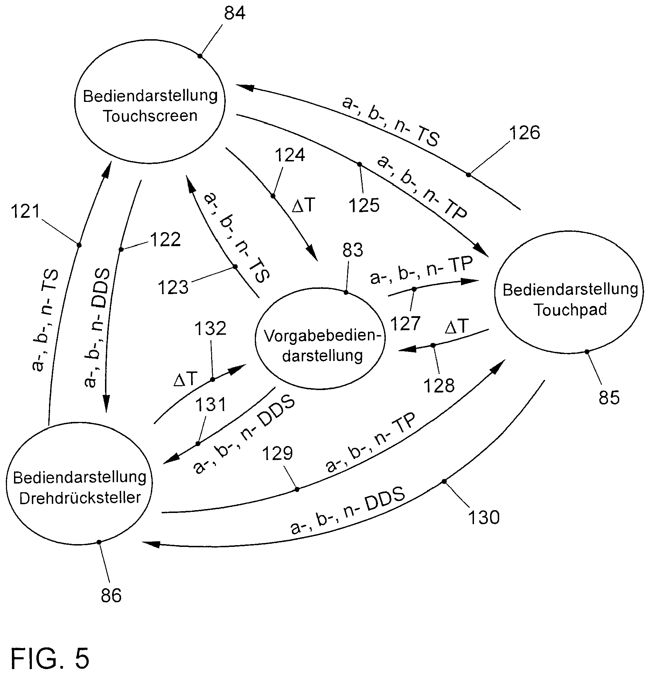

In Fig. 5 ist schematisch die Bedienlogik einer Benutzerschnittstelle grafisch dargestellt, die beispielsweise mit einer Ausführungsform korrespondiert, die im Zusammenhang mit den Fig. 4a bis 4d beschrieben ist. Das entsprechende Multifunktionsanzeige- und Bediensystem verfügt über drei Bedieneinrichtungen, einen Touchscreen (abgekürzt durch die Buchstaben "TS"), einen Touchpad (abgekürzt durch den die Buchstaben "TP") und einen Drehdrücksteller(abgekürzt durch die Buchstaben "DDS"). Die einzelnen Bedieneinrichtungen sind hierbei jeweils so ausgestaltet, dass sie eine Annäherung (abgekürzt durch den Buchstaben "a"), eine Berührung (abgekürzt durch den Buchstaben "b") und die Bedienung an sich, d. h. eine Nutzereingabe (abgekürzt durch den Buchstaben "n"), vorzugsweise getrennt erfassen können. Hierzu können die Bedieneinrichtungen auch über mehrere Sensoren verfügen. Wird eine Annäherung, eine Berührung oder eine Nutzereingabe, d.h. eine Bedienung, für eine der Bedieneinrichtungen erfasst, so wird jeweils die der Bedieneinrichtung zugeordnete Bediendarstellung (84-86) auf der Anzeigefläche zur Anzeige gebracht.

Während die mit der Betätigung verknüpften Handlungen mit Kleinbuchstaben assoziiert sind, sind die Bedieneinrichtungen mit Buchstabenkombination aus Großbuchstaben assoziiert. Über Pfeilen 121 -132 zugeordnete Beschriftungen lässt sich die Bedienlogik der Benutzerschnittstelle ableiten. Eine Schreibweise "Kleinbustabe-BUCHSTABENKOMBINATION" drückt aus, dass die mit "Kleinbuchstaben" assoziierte Handlung an der oder mit der mit der "BUCHSTABENKOMBINATION" assoziierten Bedieneinrichtung vorgenommen wird oder im Zusammenhang steht. Beispielsweise gibt die Schreibweise "a-TP" eine erkannte Annährung an das Touchpad an.

Die Beschriftung "ΔT" steht für ein Verstreichen einer vorgegebene Zeitspanne, in der keine Handlung (Annäherung, Berührung, Bedienung (Nutzereingabe)) erkannt oder erfasst ist. "ΔT" symbolisiert somit ein sogenanntes Timeout, eine "Zeitumschaltung". Die vorgegebene Zeitspanne kann beispielsweise 10s betragen. Somit ist ersichtlich, dass aus einer Bediendarstellung (84-86), die einer der Bedieneinrichtungen zugeordnet ist, nach Verstreichen der vorgegebenen Zeitspanne in die Vorgabebediendarstellung 83 gewechselt wird, wenn für keine der Bedieneinrichtungen eine Annäherung, eine Berührung oder eine Bedienung erfasst wird. Darüber hinaus ist erkennbar, dass ein Wechsel zwischen den den verschiedenen Bedieneinrichtungen zugeordneten Bediendarstellungen (84-86) unmittelbar erfolgt, wenn der Nutzer während der Nutzereingabe die verwendete Bedieneinrichtung wechselt. Eine Bedienintention wird hier beispielsweise über eine Annäherung erfasst.

Es versteht sich für den Fachmann, dass hier lediglich beispielhafte Ausführungsformen schematisch dargestellt sind.

## Patentansprüche

1. Multifunktionsanzeige- und Bediensystem (2), insbesondere für eine Verwendung in einem Kraftfahrzeug (1), umfassend
mindestens eine Anzeigevorrichtung (6) zum Anzeigen von Informationen,
eine Steuereinheit (3), die die Darstellung der Informationen auf einer Anzeigefläche (7) der Anzeigevorrichtung (6) steuert,
mindestens zwei Bedieneinrichtungen zum Erfassen von Nutzereingaben,
**dadurch gekennzeichnet, dass**
die mindestens zwei Bedieneinrichtungen unterschiedliche Bedieneinrichtungen sind, mittels derer alternativ dieselben Nutzereingaben erfassbar sind, wobei mit der Steuereinheit mindestens eine Sensoreinheit zum Erfassen einer Bedienintention eines Nutzers für eine der mindestens zwei Bedieneinrichtungen vor einer Betätigung der einen der mindestens zwei Bedieneinrichtungen zur Nutzereingabe und /oder einer Bedienintention für mindestens eine weitere der mindestens zwei Bedieneinrichtungen vor einer Betätigung dieser weiteren Bedieneinrichtung zur Nutzereingabe gekoppelt ist, und wobei die Steuereinheit (3) ausgebildet ist, die Darstellung der Informationen, die für eine Unterstützung der Nutzereingaben auf der Anzeigefläche (7) der Anzeigevorrichtung (6) angezeigt werden, mittels unterschiedlicher Bediendarstellungen (21,23) zu steuern, die jeweils angepasst an diejenige der mindestens zwei Bedieneinrichtungen ausgestaltet sind, über welche eine Nutzereingabe erfasst wird oder für die eine Bedienintention für eine Nutzereingabe erfasst ist, wobei eine Darstellung von virtuellen Bedieneinrichtungen und/oder Bedieneinrichtungszuordnungen in den mindestens zwei Bediendarstellungen (21, 23) jeweils angepasst an eine geometrische Ausgestaltung derjenigen der mindestens zwei Bedieneinrichtungen erfolgt, über welche eine Nutzereingabe erfasst wird oder für die eine Bedienintention für eine Nutzereingabe erfasst ist und hierdurch die entsprechende Bediendarstellung (21, 23) zur Anzeige gebracht ist.

2. Multifunktionsanzeige- und Bediensystem (2) nach Anspruch 1, **dadurch gekennzeichnet, dass** eine entsprechende der unterschiedlichen Bediendarstellungen jeweils die dargestellten Informationen optimiert für eine Erfassung der Nutzereingabe mittels derjenigen der mindestens zwei Bedieneinrichtungen aufweist, über welche eine Nutzereingabe erfasst wird oder für die eine Bedienintention für eine Nutzereingabe erfasst ist.

3. Multifunktionsanzeige- und Bediensystem (2) nach einem der vorangehenden Ansprüche, **dadurch gekennzeichnet, dass** mindestens eine weitere Sensoreinheit ausgebildet ist, die Bedienintention für die mindestens eine weitere der mindestens zwei Bedieneinrichtungen vor einer Betätigung dieser weiteren Bedieneinrichtung zur Nutzereingabe zu erfassen.

4. Multifunktionsanzeige- und Bediensystem (2) Anspruch 3, **dadurch gekennzeichnet, dass** der mindestens einen Bedieneinrichtung die mindestens eine Sensoreinheit und der mindestens einen weiteren Bedieneinrichtung die mindestens eine weitere Sensoreinheit jeweils zum Erfassen der Bedienintention zugeordnet sind.

5. Multifunktionsanzeige- und Bediensystem (2) nach einem der vorangehenden Ansprüche, **dadurch gekennzeichnet, dass** mindestens eine der mindestens zwei Bedieneinrichtungen als eine berührungsempfindliche Positionserfassungseinheit (9) ausgebildet ist.

6. Multifunktionsanzeige- und Bediensystem (2) nach Anspruch 4, **dadurch gekennzeichnet, dass** Positionen auf der als berührungsempfindliche Positionserfassungseinheit (9) ausgebildeten Bedieneinrichtung mit Positionen auf der Anzeigefläche (7) assoziiert sind.

7. Multifunktionsanzeige- und Bediensystem (2) nach einem der vorangehenden Ansprüche, **dadurch gekennzeichnet, dass** mindestens eine der mindestens zwei Bedieneinrichtungen als Drehdrücksteller (11) oder Tastenfeld (12) mit vorzugsweise mehreren Bedientasten ausgebildet ist.

8. Verfahren zum Steuern eines Multifunktionsanzeige- und Bediensystems (2), insbesondere in einem Kraftfahrzeug (1), wobei das Multifunktionsanzeige- und Bediensystem (2)
mindestens eine Anzeigevorrichtung (6) zum Anzeigen von Informationen,
eine Steuereinheit (3), die die Darstellung der Informationen auf der Anzeigefläche (7) steuert, und
mindestens zwei unterschiedliche Bedieneinrichtungen zum Erfassen von Nutzereingaben umfasst, wobei über die unterschiedlichen Bedieneinrichtungen alternativ dieselben Nutzereingaben erfasst werden können,
wobei das Verfahren die Schritte umfasst:
Ansteuern der Anzeigevorrichtung (6) in der Weise, dass Informationen für eine Unterstützung der Nutzereingaben auf der Anzeigefläche (7) zu Anzeige gebracht werden,
**dadurch gekennzeichnet, dass**
Sensordaten mindestens einer Sensoreinheit erfasst und ausgewertet werden, um die Bedienintention eines Nutzers für eine der mindestens zwei Bedieneinrichtungen vor einer Betätigung der einen Bedieneinrichtung zur Nutzereingabe zu erfassen oder für eine weitere der mindestens zwei Bedieneinrichtungen vor einer Betätigung der einen weiteren Bedieneinrichtung zur Nutzereingabe zu erfassen, wobei die Darstellung der Informationen auf der Anzeigefläche (7) der Anzeigevorrichtung (6) so gesteuert wird, dass die für eine Unterstützung der Nutzereingaben auf der Anzeigefläche (7) der Anzeigevorrichtung (6) zur Anzeige gebrachten Informationen, mittels unterschiedlicher Bediendarstellungen (21,23) dargestellt werden, die entsprechend jeweils angepasst an diejenige der mindestens zwei Bedieneinrichtungen ausgestaltet werden, über welche eine Nutzereingabe erfasst wird oder für die eine Bedienintention für eine Nutzereingabe erfasst ist, wobei eine Darstellung von virtuellen Bedieneinrichtungen und/oder Bedieneinrichtungszuordnungen in den mindestens zwei Bediendarstellungen (21, 23) angepasst an eine geometrische Ausgestaltung der Bedieneinrichtung vorgenommen wird.

9. Verfahren nach Anspruch 8, **dadurch gekennzeichnet, dass** die Informationen in den Bediendarstellungen jeweils optimiert für eine Nutzereingabe über diejenige der mindestens zwei Bedieneinrichtungen, über welche eine Nutzereingabe erfasst wird oder für die eine Bedienintention für eine Nutzereingabe erfasst ist, angepasst dargestellt werden.

10. Verfahren nach einem der Ansprüche 8 oder 9, **dadurch gekennzeichnet, dass** von mindestens einer weiteren Sensoreinheit erfasste Daten ausgewertet werden, um zusätzlich eine Bedienintention der mindestens einen weiteren Bedieneinrichtung vor einer Betätigung zur Nutzereingabe zu ermitteln.

11. Verfahren nach Anspruch 10, **dadurch gekennzeichnet, dass** die Bedienintention der mindestens einen Bedieneinrichtung mittels der mindestens einen Sensoreinheit und die Bedienintention der mindestens einen weiteren Bedieneinrichtung mittels der mindestens einen weiteren Sensoreinheit erfasst werden.

12. Verfahren nach einem der Ansprüche 8 bis 11, **dadurch gekennzeichnet, dass** mittels der mindestens zwei Bedieneinrichtungen unterschiedliche Betätigungshandlungen beim Erfassen der Nutzereingabe erfasst und/oder ausgewertet werden.

13. Verfahren nach einem der Ansprüche 8 bis 12, **dadurch gekennzeichnet, dass** die Informationen in einer Vorgabebediendarstellung oder Informationsvermittlungsdarstellung zur Anzeige gebracht werden, wenn keine Bedienintention erkannt ist und keine Nutzereingabe erfasst wird.

## Claims

1. A multi-function display and operating system (2), in particular, for use in a motor vehicle (1), comprising
at least one display device (6) for displaying information, a control unit (3), which controls the representation of information on a display surface (7) of the display device (6),
at least two operating units for capturing user inputs,
**characterized in that**
the at least two operating units are different operating units, by means of which the same user inputs can be alternatively captured, wherein at least one sensor unit is coupled with the control unit for capturing an operating intention of the user for one of the at least two operating units before an actuation of the one of the at least two operating units for the user input and/or an operating intention for at least one further of the at least two operating units before an actuation of said further operating unit for the user input, and wherein the control unit (3) is designed to control the representation of the information, which is displayed for a support of the user input on the display surface (7) of the display device (6), by means of different operating representations (21, 23), which in each case are designed adapted to that of the at least two operating units, by means of which a user input is captured or for which an operating intention for a user input is captured, wherein a representation of virtual operating units and/or operating unit assignments in the at least two operating representations (21, 23) takes place in each case adapted to a geometric design of that of the at least two operating units, by means of which a user input is captured or for which an operating intention is captured for a user input and thus the corresponding operating representation (21, 23) is displayed.

2. A multi-function display and operating system (2) according to Claim 1, **characterized in that** a corresponding one of the different operating representations has in each case the represented information optimized for a capture of the user input by means of that of the at least two operating units, by means of which a user input is captured or for which an operating intention for a user input is captured.

3. A multi-function display and operating system (2) according to any one of the preceding claims, **characterized in that** at least one further sensor unit is designed to capture the operating intention for the at least one further of the at least two operating units before an actuation of said further operating unit.

4. A multi-function display and operating system (2) according to Claim 3, **characterized in that** the at least one sensor unit is assigned to the at least one operating unit and the at least one further sensor unit is assigned to the at least one further operating unit in each case for capturing the operating intention.

5. A multi-function display and operating system (2) according to any one of the preceding claims, **characterized in that** at least one of the at least two operating units is designed as a touch-sensitive position-sensing unit (9).

6. A multi-function display and operating system (2) according to Claim 4, **characterized in that** positions on the operating unit designed as touch-sensitive position-sensing unit (9) are associated with positions on the display surface (7).

7. A multi-function display and operating system (2) according to any one of the preceding claims, **characterized in that** at least one of the at least two operating units is designed as rotary push-button controller (11) or keypad (12) with preferably a plurality of operating keys.

8. A method for controlling a multi-function display and operating system (2), in particular in a motor vehicle (1), wherein the multi-function display and operating system (2) comprises at least one display device (6) for displaying information, a control unit (3), which controls the representation of the information on the display surface (7), and at least two different operating units for capturing user inputs, wherein the same user inputs can be captured alternatively by means of the different operating units, wherein the method comprises the steps:
Control of the display device (6) in such a manner that information for a support of the user inputs is displayed on the display surface (7),
**characterized in that**
sensor data at least of one sensor unit are captured and evaluated, in order to capture the operating intention of a user for one of the at least two operating units before an actuation of the one operating unit for the user input or for a further one of the at least two operating units before an actuation of the one further operating unit for the user input, wherein the representation of the information on the display surface (7) of the display device (6) is controlled such that the information displayed for a support of the user inputs on the display surface (7) of the display device (6), is represented by means of different operating representations (21, 23), which are designed adapted appropriately in each case to that of the at least two operating units, by means of which a user input is captured or for which an operating intention for a user input is captured, wherein a representation of virtual operating units and/or operating unit assignments in the at least two operating representations (21, 23) is carried out adapted to a geometric design of the operating unit.

9. A method according to Claim 8, **characterized in that** the information is represented adapted in the operating units in each case optimized for a user input by means of that of the at least two operating units, by means of which a user input is captured or for which an operating intention for a user input is captured.

10. A method according to any one of Claims 8 or 9, **characterized in that** data captured by at least one further sensor unit are evaluated, in order to determine in addition an operating intention of the at least one further operating unit before an actuation for the user input.

11. A method according to Claim 10, **characterized in that** the operating intention of the at least one operating unit is captured by means of the at least one sensor unit and the operating intention of the at least one further operating unit is captured by means of the at least one further sensor unit.

12. A method according to any one of Claims 8 to 11, **characterized in that** by means of the at least two operating units different actuating acts are captured and/or evaluated when the user input is captured.

13. A method according to any one of Claims 8 to 12, **characterized in that** the information is displayed in a default operating representation or information transfer representation, if no operating intention is recognized and no user input is captured.

## Revendications

1. Système d'affichage et de commande multifonctions (2), plus particulièrement destiné à être utilisé dans un véhicule à moteur (1), comprenant
au moins un dispositif d'affichage (6) pour l'affichage d'informations,
une unité de contrôle (3) qui contrôle la représentation des informations sur une surface d'affichage (7) du dispositif d'affichage (6),
au moins deux dispositifs de commande pour la détection d'entrées d'utilisateurs,
**caractérisé en ce que**
les au moins deux dispositifs de commande sont des dispositifs de commande différents au moyen desquels les mêmes entrées d'utilisateurs peuvent être détectées en alternance, moyennant quoi, avec l'unité de contrôle, est couplée au moins une unité de capteur pour la détection d'une intention de commande d'un utilisateur pour un des au moins deux dispositifs de commande avant un actionnement d'un des au moins deux dispositifs de commande pour l'entrée de l'utilisateur et/ou la détection d'une intention de commande pour au moins un autre des au moins deux dispositifs de commande avant un actionnement de cet autre dispositif de commande pour l'entrée de l'utilisateur, et l'unité de contrôle (3) étant conçue pour contrôler la représentation des informations qui sont affichées pour un soutien des entrées d'utilisateurs sur la surface d'affichage (7) du dispositif d'affichage (6), au moyen de différentes représentations de commande (21, 23), qui sont adaptées chacune à celle des au moins deux dispositifs de commande, par l'intermédiaire desquels une entrée d'utilisateur est détectée ou pour lequel une intention de commande pour une entrée d'utilisateur est détectée, une représentation de dispositifs de commande et/ou de dispositions de dispositifs de commande virtuels dans les au moins deux représentations de commande (21, 23) étant adaptée chacune à une forme géométrique de celui des au moins deux dispositifs de commande par l'intermédiaire duquel une entrée d'utilisateur est détectée ou pour lequel une intention de commande pour une entrée d'utilisateur est détectée et la représentation de commande (21, 23) correspondante est ainsi affichée.

2. Système d'affichage et de commande multifonctions (2) selon la revendication 1, **caractérisé en ce qu'**une représentation de commande correspondante des différentes représentations de commande comprend chacune, de manière optimisée, les informations représentées pour une détection de l'entrée d'utilisateur pour une détection de l'entrée d'utilisateur au moyen de celui des au moins deux dispositifs de commande par l'intermédiaire duquel une entrée d'utilisateur est détectée ou pour lequel une intention de commande pour une entrée d'utilisateur est détectée.

3. Système d'affichage et de commande multifonctions (2) selon l'une des revendications précédentes, **caractérisé en ce qu'**au moins une autre unité de capteur est conçue pour détecter l'intention de commande pour l'au moins un autre des au moins deux dispositifs de commande avant un actionnement de cet autre dispositif de commande pour l'entrée d'utilisateur.

4. Système d'affichage et de commande multifonctions (2) selon la revendication 3, **caractérisé en ce que**, à l'au moins un dispositif de commande, correspond l'au moins une unité de capteur et, à l'au moins un autre dispositif de commande, correspond une autre unité de capteur, pour la détection de l'intention de commande.

5. Système d'affichage et de commande multifonctions (2) selon l'une des revendications précédentes, **caractérisé en ce qu'**au moins un des deux dispositifs de commande est conçu comme une unité de détection de position tactile (9).

6. Système d'affichage et de commande multifonctions (2) selon la revendication 4, **caractérisé en ce que** des positions sur le dispositif de commande conçu comme une unité de détection de position tactile (9) sont associées à des positions sur la surface d'affichage (7).

7. Système d'affichage et de commande multifonctions (2) selon la revendication 3, **caractérisé en ce qu'**au moins un des deux dispositifs de commande est conçu comme une molette de sélection par poussée (11) ou un clavier (12) avec de préférence plusieurs touches de commande.

8. Procédé de contrôle d'un système d'affichage et de commande multifonctions (2), plus particulièrement dans un véhicule à moteur (1), le système d'affichage et de commande multifonctions (2) comprenant
au moins un dispositif d'affichage (6) pour l'affichage d'informations,
une unité de contrôle (3) qui contrôle la représentation des informations sur une surface d'affichage (7) du dispositif d'affichage (6) et
au moins deux dispositifs de commande pour la détection d'entrées d'utilisateurs, les mêmes entrées d'utilisateurs pouvant être détectées en alternance par l'intermédiaire des différents dispositifs de commande,
le procédé comprenant les étapes suivantes :
contrôle du dispositif d'affichage (6) de façon à ce que des informations pour le soutien des entrées d'utilisateurs sont affichées sur la surface d'affichage (7),
**caractérisé en ce que**
des données de capteurs d'au moins une unité de capteur sont détectées et analysées afin de détecter l'intention de commande d'un utilisateur pour un des au moins deux dispositifs de commande avant un actionnement d'un dispositif de commande pour l'entrée d'utilisateur ou pour un autre des au moins deux dispositifs de commande avant un actionnement de cet autre dispositif de commande pour l'entrée d'utilisateur, la représentation des informations sur la surface d'affichage (7) du dispositif d'affichage (6) étant contrôlée de façon à ce que les informations affichées pour un soutien des entrées d'utilisateurs sur la surface d'affichage (7) du dispositif d'affichage (6), sont représentées au moyen de différentes représentations de commande (21, 23) qui sont adaptées chacune à celui des au moins deux dispositifs de commande par l'intermédiaire duquel une entrée d'utilisateur est détectée, ou pour lequel une intention de commande pour une entrée d'utilisateur est détectée, une représentation de dispositifs de commande et/ou de dispositions de dispositifs de commande virtuels dans les au moins deux représentations de commande (21, 23) étant adaptée à une forme géométrique du dispositif de commande.

9. Procédé selon la revendication 8, **caractérisé en ce que** les informations dans les représentations de commande sont représentées de manière optimisée et adaptée pour une entrée d'utilisateur par l'intermédiaire de celui des au moins deux dispositifs de commande par l'intermédiaire duquel une entrée d'utilisateur est détectée ou pour lequel une intention de commande pour une entrée d'utilisateur est détectée.

10. Procédé selon l'une des revendications 8 ou 9, **caractérisé en ce que** les données détectées par au moins une autre unité de capteur sont analysées afin de déterminer en outre une intention de commande de l'au moins un autre dispositif de commande avant un actionnement pour l'entrée d'utilisateur.

11. Procédé selon la revendication 10, **caractérisé en ce que** l'intention de commande de l'au moins un dispositif de commande est détecté au moyen de l'au moins une unité de capteur et l'intention de commande de l'au moins un autre dispositif de commande est détecté au moyen de l'au moins une autre unité de capteur.

12. Procédé selon l'une des revendications 8 à 11, **caractérisé en ce que**, au moyen des au moins deux dispositifs de commande, sont détectées et/ou analysées différentes actions d'actionnement lors de la détection de l'entrée d'utilisateur.

13. Procédé selon l'une des revendications 8 à 12, **caractérisé en ce que** les informations sont affichées dans une représentation de commande de consigne ou une représentation de transmission de données, lorsqu'aucune intention de commande et aucune entrée d'utilisateur ne sont détectées.
